# EUROPEAN PATENT SPECIFICATION

(11) **EP 2 593 374 B1**
(45) Date of publication and mention of the grant of the patent: **05.10.2016**
(21) Application number: 10742586.0
(22) Date of filing: 13.07.2010
(51) Int. Cl.: B65D 19/12, B65D 19/08, B23P 17/02, B65D 21/02

(54) **CRATE**
KISTE
CAISSE À CLAIRE-VOIE

(43) Date of publication of application: 22.05.2013
(73) Proprietor: Lam, David Choon Sen, Singapore 689014 (SG)
(72) Inventor: Lam, David Choon Sen, Singapore 689014 (SG)
(74) Representative: Moffat, John Andrew
(86) International application number: PCT/IB2010/053200
(87) International publication number: WO 2012/007792

(56) References cited:
- WO-A2-03/055755
- GB-A- 771 776
- GB-A- 771 776

## Description

The present invention relates to a crate and to method of assembling such a crate. The invention has particular, though not exclusive, utility in relation to crates used for the transportation of goods, such as those used in sea going containers.

Crates are known for the transport of goods. Such crates can be packed to achieve high density, for example in shipping containers. It is known, for example from WO 03/055755, to provide a crate that may be collapsed by rotation of hinged panels into an area defined by the base to reduce space for transportation or storage when empty. However, while this construction has the advantage of allowing for space efficient storage when not in use, it allows only for the construction of a crate of one set of fixed dimensions.

GB 771 776 discloses a crate having four support members for a base plate and four posts. The crate further comprises removable side walls which are connected to the posts.

It is an advantage of the present invention that it allows both for space efficient storage of the component parts when not is use, but also flexibility in the dimensions and accessibility of the crate when constructed.

According to a first aspect of the present invention, a crate comprises a framework of demountable elements comprising at least two base plates, each being generally rectangular and having longer and shorter sides, at least four elongate support members, each having first and second ends, two of said elongate members being located to provide support along opposing longer sides of each of the base plates, at least eight connector members, each of the connector members being located at an end of each elongate support member, a plurality of upright posts, each adapted to be associated with the connector member located at the end of the elongate support member and a plurality of panels, each panel being adapted to be secured to two of the posts, at least one of the panels being adapted during use of the crate to be demountable from the framework.

Preferably each post is associated with a single connecting member. Alternatively, one or more of the posts may be associated with two adjacent connecting members.

Preferably the crate may be stackable. More preferably, a plurality of the posts are provided with a first engagement means extending above an adjacent panel for engagement with a second engagement means formed in the underside of a second crate to be located above the crate. More preferably the first engagement means is a shaped protrusion.

Preferably the elongate support members are provided with means for receiving the forks of a fork-lift truck.

According to a second aspect present invention a method of constructing a crate comprises providing four elongate support members, two of the elongate support members supporting first and second longer sides of a first base plate and two of the elongate support members supporting first and second longer sides of a second base plate, the second base plate being disposed adjacent the first, providing connectior members at each end of each of the elongate support members, providing an upright post in association with each connector member and securing a panel between each pair of adjacent posts, at least one of the panels being releasably secured to its associated posts.

Preferably, each of the first and second base plates has a pair of longer sides and a pair of shorter sides. More preferably, the base plates are disposed with their longer sides adjacent one another. Alternatively, the first and second base plates are disposed with their shorter sides adjacent one another.

Preferably each post is associated with a single connector member. Alternatively, a post may be associated with two adjacent connector members.

The invention will now be described, by way of example only, in relation to the attached Figures, in which
Figure 1 shows a schematic view illustrating an initial stage in constructing a base for a first embodiment of a crate in accordance with the present invention;
Figure 1A shows a first end view of a detail of the embodiment illustrated in Figure 1;
Figure 1B shows a second end view of a detail of the embodiment illustrated in Figure 1;
Figure 1C shows a perspective view of a connector member for use in the present invention;
Figure 2 shows an plan view of the bracket shown in Figures1, 1A and 1B;
Figure 2A shows an exploded view of the bracket of Figure 2 and associated fasteners;
Figure 3 shows a schematic view illustrating an intermediate stage for constructing the base of the first embodiment of a crate in accordance with the present invention;
Figure 3A shows a detail of a joint shown in Figure 3;
Figure 3B shows an exploded view of a base plate, corner posts and associated transverse member and an end wall for use in the present invention;
Figure 3C shows an exploded view of one end of a connecting member and a support member for use in accordance with the present invention
Figure 4 shows a further stage in constructing the first embodiment of a crate in accordance with the present invention;
Figure 5 shows a further stage in constructing a second embodiment of a crate in accordance with the present invention;
Figure 5A shows a detail of adjacent connecting members as shown in Figure 5;
Figure 6 shows a view similar to that shown in Figure 5;
Figure 6A shows a detail of a first set of adjacent corner posts shown in Figure 6; and
Figure 6B shows a detail of second set of adjacent corner posts shown in Figure 6.

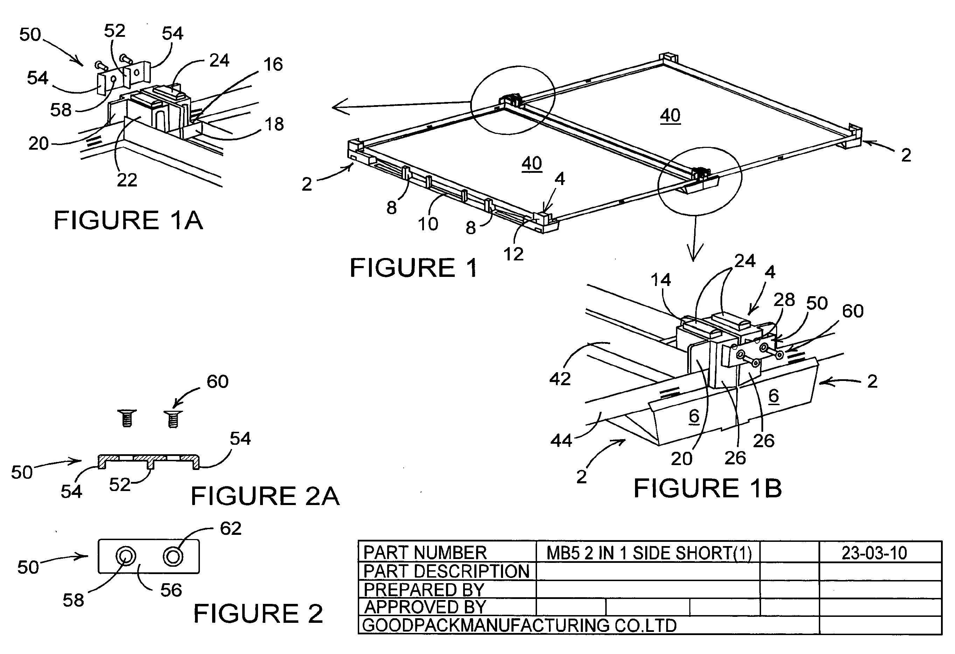

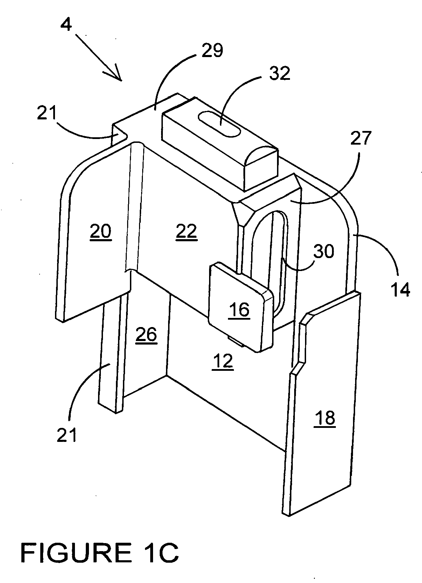

Referring first to Figure 1, a schematic view illustrating an initial stage in constructing a base for a first embodiment of a crate in accordance with the present invention is shown. Four generally elongate support members 2 are shown, each being provided at a first end and at a second end with connector members 4 in a manner to be described.

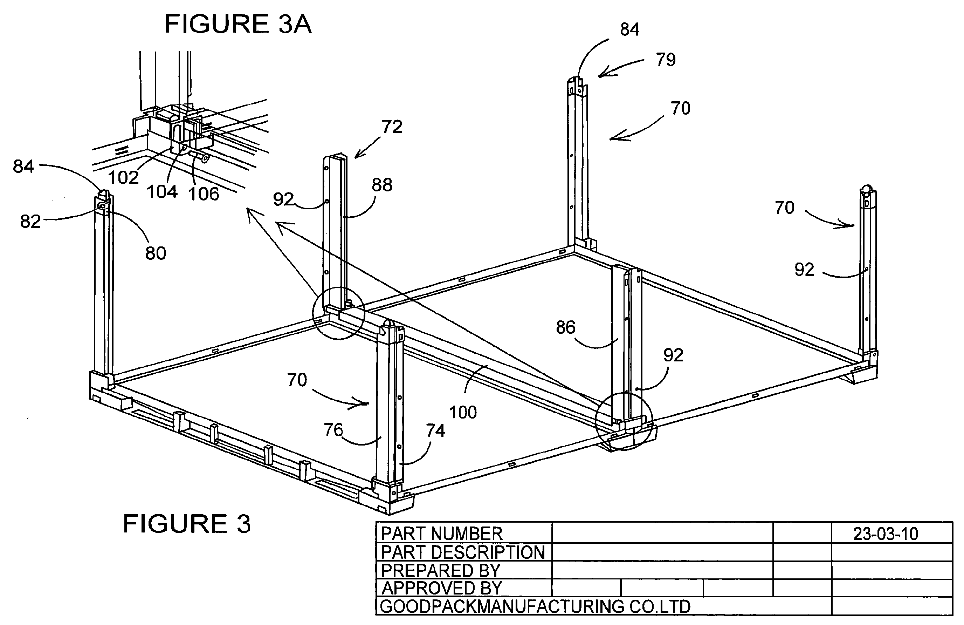

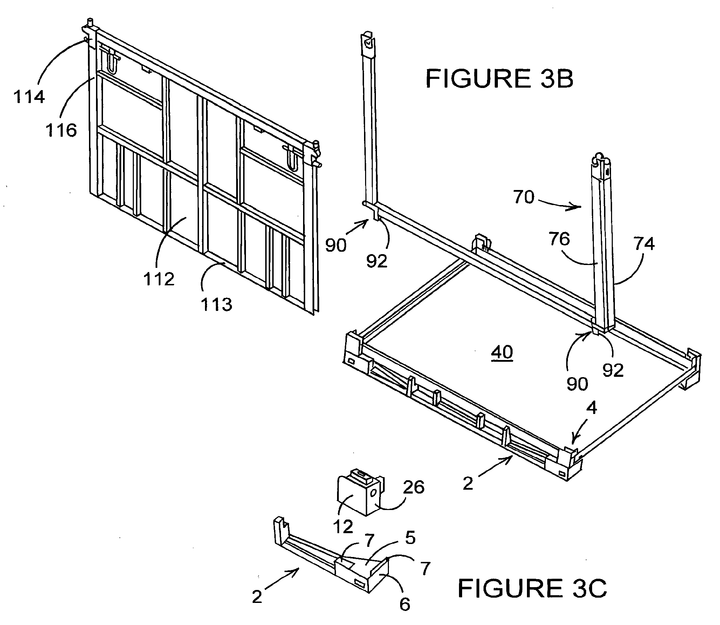

The support members 2 comprise a flat limb provided at each first and second end with a corner piece 6. Each corner piece comprises a formed generally planar surface 5. Each corner piece includes two upstanding walls from which extend retaining flanges 7. Each retaining flange 7 extends at an angle from the upstanding wall. Each retaining flange 7 does not extend along an entire upper of the upstanding wall, and leaves a cutway portion at a junction of the two upstanding walls (this can be seen most clearly in Figure 3B).

Between the first and second ends each support member 2 is provided with two spaced generally L - shaped members 8 comprising an upright portion and a support portion. Between the spaced L - shaped members 8 there is provided a generally U- shaped member 10 secured to one side of the flat limb in line with the upright portions of the spaced L - shaped members. The U-shaped member may conveniently be formed from two vertical tubular steel sections connected to a longer horizontal tubular steel section, itself connected, by any suitable means, to the flat limb of the support member 2.

Each connector member 4 comprises a first substantially planar upright side face 12 defining the height of the connector 4. The first side face includes a first flange 14 extending along the full height of the first upright side face 12.

The first flange 14 is provided at a first end with an extension 18 extending substantially perpendicular to the first flange, from a bottom edge of the first flange 14 part way up the first flange 14. The extension 18 is provided with a stepped chamfer along its free upright edge.

The first side face 12 is connected at a second end to a first end face 26 extending substantially perpendicular to the first face and is of the same height as the first face 12. As can be seen, the lower edges of the first end face 26, the first face 12 and the extension 18 provide a stable base on which the connector member 4 may stand.

The first end face 26 is itself provided remote from the first face with a projection 21 extending substantially perpendicular thereto, the projection 21 extending along the height of the end face. The projection 21 can be seen to extend substantially parallel to the first side face 12. A second flange 20 extends substantially perpendicularly from the projection away from the first side face 12.

The second flange 20 extends from an upper surface of the projection 21 part way down the projection 21. An upper portion 22 of the projection 21 extends beyond the second flange 20 and extends from an upper surface of the projection 21 downwards along a part of the second flange 20. The upper portion 22 of the projection 21 extends part way towards the extension 18. A second end face 27 connects the upper portion 22 of the projection 21 to the first side face 12. The second end face 27 extends sustainably parallel to the first end face 26. The second end face 27 is provided with a substantially elongate slot 30. A tab 16 extends outwardly from the upper portion 22 of the projection 21 toward the extension 18.

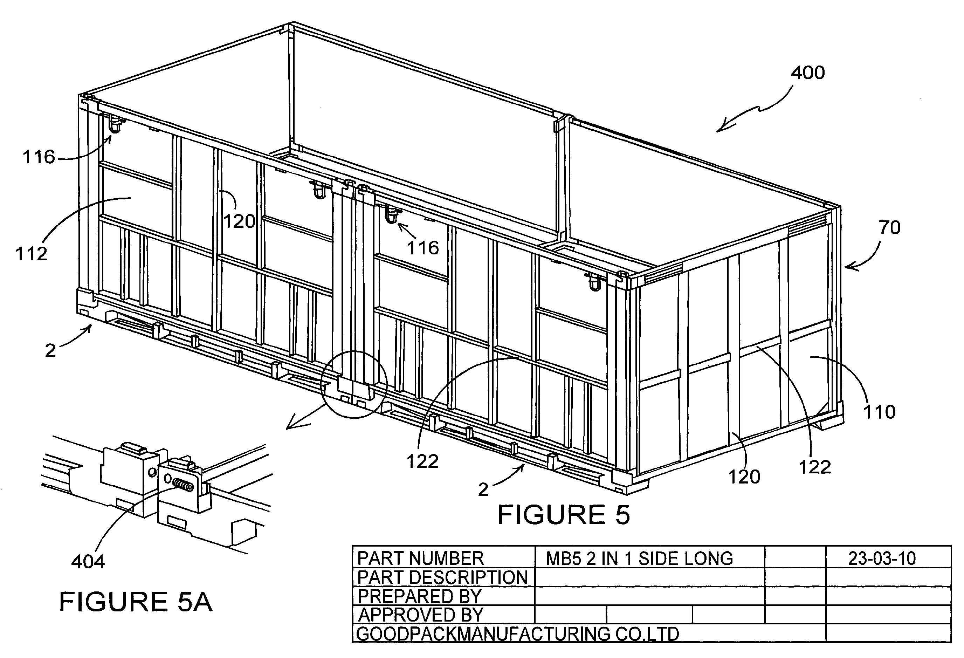

An upper face 29 of the connector member 4 connects the upper edges of the projection 21, the second end face 27, the first side face 12 and the first end face 26. The upper face 29 is conveniently provided with a bevelled surface where it connects with the second end face 27. The upper face 29 is provided with a shaped land 24. The land 24 is set back from the edges of the upper face 29. The land 24 is provided with a curved upper surface and chamfers at each end (Figures 1A and 1B). The upper surface of the land 24 may further be provided with a recess (Figure 5A).

The first end face 26 is provided with a bore 28. Conveniently the bore 28 may be provided with a thread. The bore 28 extends into a cavity within the connector member 4 defined by the projection 21, the second end face 27, the first side face 12, the first end face 26 and the upper face 29. The cavity may be accessed through the elongate slot 30 or from beneath.

A further elongate opening 32 is provided in an upper part of the curved upper surface of the land 24.

The connector 4 may be formed by any suitable means, conveniently by casting.

Each connector member 4 is not connected to the support member 2, rather each connector member is retained by a corner piece 6. With particular reference to Figure 3C, it may be seen that the connector member 4 seats on the generally planar surface 5 of the support member 2 with its face 12 and end face 26 within the cutaway portions of the retaining flanges 7 against the upstanding walls of the corner piece 6. The edges of the retaining flanges 7 abut the projection 21 and the extension 18 to hold the connector member 4 laterally in position.

In Figure 1 two base panels 40 are shown.

Each base panel 40 is generally rectangular having two longer sides and two shorter sides. Each side terminates in an upturned hem or flange 42,44. In the illustrated embodiment the flanges 42 along the longer sides extend further than the flanges 44 along the shorter side.

Each base panel 40 is supported along a longer edge by a support member 2. It can be seen that the longer edges of the base plate 40 are supported on the support surfaces of the L - shaped members 8 and the upturned hem or flange 42 abuts against the upright portions of the L - shaped members 8 and upwardly extending parts of the U - shaped member 10.

The base plates 40 are not directly secured to the support members 2.

With the base plates 40 in position in relation to the elongate members 2, the connector members 4 are located in the corner pieces 6 as described above. (Figure 1A). This results in the upturned hem or flange 42 of the longer side of the base plate 40 is adjacent the upper portion 22 of the projection 21 and the tab 16 and in the upturned hem or flange 44 of the shorter side of the base plate 40 adjacent the corner of the base plate 40 being seated beneath the side flange 20 of the connector member 4.

It can be seen from Figure 1 that the two base panels 40 have been arranged such that they lie with their longer sides substantially adjacent one another and with adjacent connector members 4 disposed in a mirrored relationship such that each has its substantially planar upright side face 12 disposed adjacent the other and the second upright side faces 22 bearing the shallow recess disposed away from one another.

A generally m - shaped bracket 50 is provided to secure the adjacent connector members 4 together. A central limb 52 of the bracket sits between the two connector members 4. The web 56 connecting the central limb 52 with each end limb 54 is sized such that a connector member 4 can be received between and end limb 54 and the central limb 52. The connecting web 56 is also provided with spaced openings 58, such that in use each of the openings 58 will align with the bore 28 of the respective connector member 4. Each end limb 54 extends around the respective connector member 4 towards the side flange 20 of the connector member 4.

The bracket 50 may be secured to the respective connector members 4 by any convenient means such as by way of threaded fasteners 60, for example bolts or screws extending through the openings in the brackets 50 and being received within the bores 28. Alternatively, by way of example, a headed fastener such as bolt may pass through the bracket openings 58 and the connector member bore 28 to engage with a retaining member such as a nut or other threaded member to hold the bracket 50 against the connector member 4. The bracket openings 58 may conveniently be provided with bevels 62 to aid in location of the threaded fasteners 60 (Figure 2).

In constructing a framework for the crate upright posts next need to be fitted. These can conveniently take two forms, corner posts 70 and uprights 72 as are best illustrated in Figure 3.

The corner posts comprise first and second substantially perpendicular blades 74,76.

The first of the perpendicular blades 74 is provided with a number of fixing location points 78 along its length. The second of the perpendicular blades 76 is provided in an upper region 79 with a bore 80 extending into the plane of the blade and a recessed portion 82. The upper region 79 may be formed of the same material as the remainder of the corner post 70 or of a different material.

Upwardly extending shaped protrusions 84 may be provided on the top surface of the upper region 79 of the corner posts 70.

As may be seen in the embodiment of Figure 3B, the corner posts are connected by a substantially horizontal transverse member 71 extending between the bottom regions of each corner post 70. On a lower surface of the transverse member 71 towards each end thereof there are provided engagement means. Conveniently these engagement means take the form of projections 90 adapted to extend through the elongate opening 32 in the upper surface of the land 24 of the connector member 4. Each projection 90 is provided with a through bore 92.

The substantially horizontal transverse member 71 is of generally inverted U-shaped section and in use covers an upturned hem 42 of the base plate 40

In use, a hinge pin (not shown) extends through an the elongate slot 30 in the connection member 4 and through the through bore 92 to retain the corner posts 70 to the connection member 4. The hinge pin may slide in the elongate slot.

The uprights 72 comprise a member of generally top hat section in which two side pieces 86 are connected together at a first end by a connecting web 88 and each side piece is provided at a second end with an outwardly extending flange 90. The side pieces are adapted to sit about the land 24 on one of the connector members 24 held within the bracket 50. Each of the flanges 90 is also provided with a number of fixing location points 92 along its length.

The uprights 72 are connected by a substantially horizontal transverse cross member 100. The cross member 100 is of generally inverted U-shaped section having at each end a member 102 depending from the cross member 100. The depending member 102 is provided with a through bore 104. The depending member 102 is sized to fit within that portion of the connector member 4 defined by second end face 27, the first flange 14, the extension 18 and the tab 16. Conveniently a hinge pin 106 may pass through the depending member 102 of the transverse cross member 100 and the elongate slot 30 of the connector member 4 to locate the uprights 72 in position. As can be seen the is seen the inverted U-shaped cross bar covers the upturned hems 42 of adjacent bases plates as well as the gap between them.

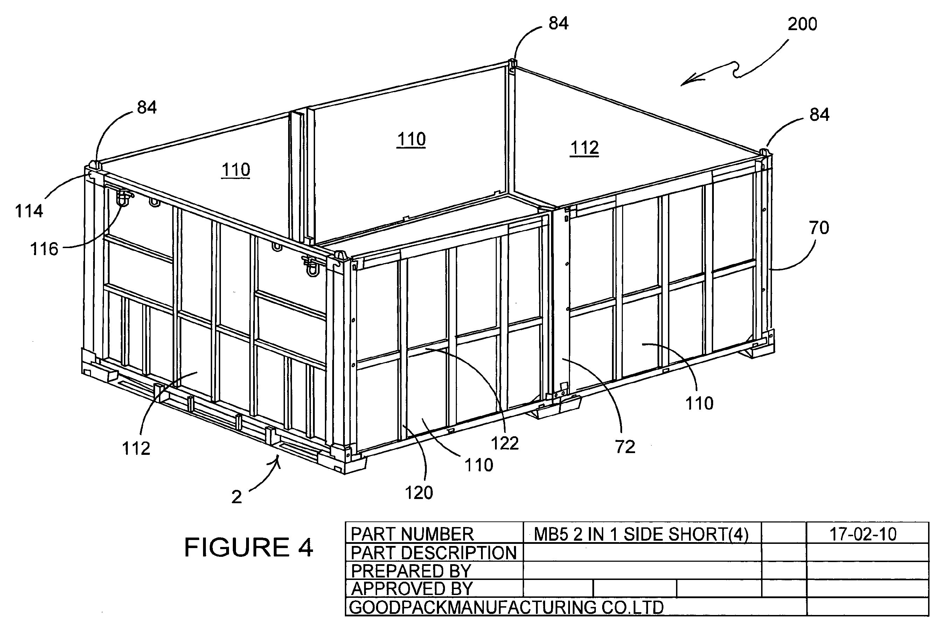

Once the framework for the crate is in place, panels 110,112 forming the sides of the crate may be secured in place (Figure 4).

In the embodiment of Figure 4, generally fixed panels 110 are located to either side of the uprights 72. The panels 110 are fitted from within the framework such that the edges of the panels 110 abut the inside of the shorter edge of the base panel, one side of the upright 72 and the second blade 76 of a corner post 70. The panels 110 may be releasably secured in position by any suitable means by means of the fixing location points 78, 92.

Conveniently the panels are secured from within the volume of the crate to prevent unauthorised access to the crate by removal of the panels form outside of the crate.

The demountable panels 112 at the ends of the crate 200 are however secured in a different manner. The demountable panels 112 are provided with shaped fingers 114 to each side of an upper end thereof and shaped recesses at a lower end thereof. The recesses at the lower edge of the panel 112 match the connector members 4.

The demountable panel 112 is then positioned such that the shaped fingers 114 are received in the shaped recess 82 to support the demountable panel 112. Sliding bolts 116 adapted to be reciprocally received within the bores 80 of the second blade of an adjacent corner post 70 may be provided to releasably secure the upper part of the demountable panel 112 to the second blade 76 of the adjacent corner post 70. The panel 112 is provided with means by which the sliding bolts 116 may be secured in a retaining configuration to ensure that unauthorised access to the contained in not obtained. A lower edge 113 of the demountable panel 112 rests on the upper surface of the inverted U-shaped transverse member 71.

Each of the panels 110, 112 may be provided with vertical and /or horizontal cross members 120, 122 or the like to ensure the rigidity of the panels 110, 112.

Once the crate 200 has been formed in this manner it may be used to store and to transport goods. The crates formed by this method may be transported and stacked on top of one another. In the latter case, the shaped protrusions 84 are received in suitably shaped receiving means formed in the underside of the immediately above crate. The support members 2 are conveniently provided with such shaped receiving means.

The support members 2 are adapted to be used to receive the forks of a fork-lift truck to assist in the movement of such crates.

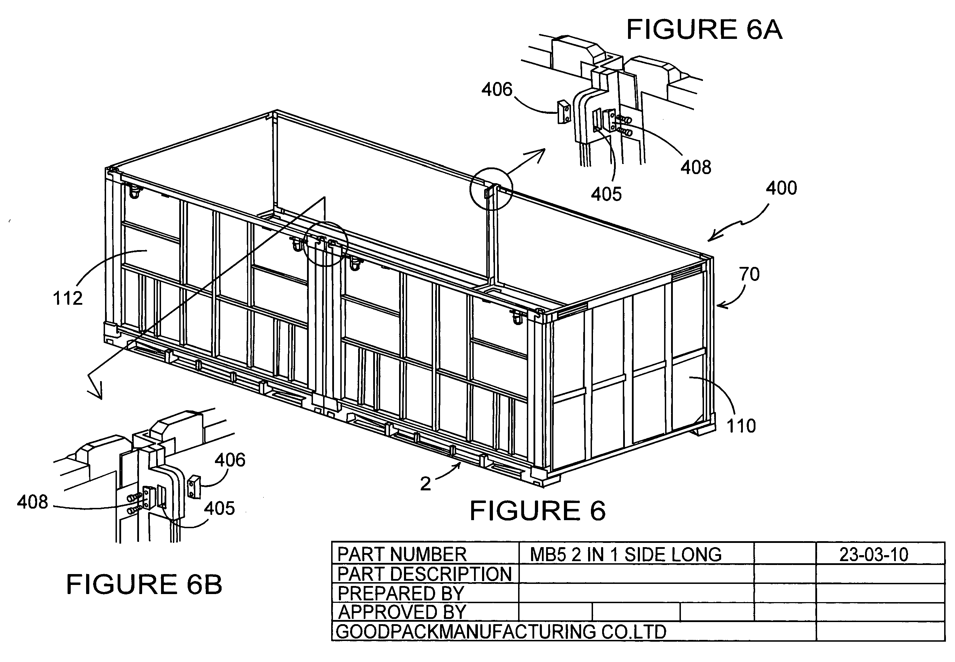

The base plates 40 may be disposed such that their shorter ends are disposed side by side (Figures 5, 5A, 6, 6A and 6B. In order to create such a crate 400 only corner posts 70 with the associated tranverse member 71 are required. Like reference numerals are used to refer to like parts. The adjacent connector members 4 may conveniently be secured together by passing a fastener 404 through the aligned bores 28 (Figure 5A).

Fixed panels 110 are secured at the ends of the crate 400 to the corner posts 70 from within the framework as described above. The front demountable panels 112 are provided as pivoting panels connected to the corner posts 70 in the manner described above. The rear panels may also be provided as demountable panels.

The inwardly directed first blades 74 of the mid located corner panels 70 may be secured together by the use of securing wedges 406 passing into securing openings 405 provided at the upper ends of the first blades 74 to clamp the adjacent corner posts 70 together.

It will further be appreciated that this crate 400 may be further subdivided by securing within the crate a generally fixed panel 110 to the inwardly directed first blades 74 of the mid located corner posts 70. This may be conveniently achieved by locating a securing wedge 406 on one of the inwardly directed first blades 74 of centrally located corner posts 70 and a generally fixed panel 110 to the other and fastening the two together.

In alternative embodiments (not shown) constructions similar to those described may be provided for save that the number and arrangement of demountable panels 112 and generally fixed panels 110 may be altered.

It will be understood that when not in use, the crate may be taken apart and the various component parts stored in a space much less than the space occupied by the assembled crate.

## Claims

1. A crate comprising a framework of demountable elements comprising
at least two base plates (40), each being generally rectangular and having longer and shorter sides,
at least four elongate support members (2), each having first and second ends, two of said elongate support members (2) being located to provide support along opposing longer sides of each of the base plates (40) at least eight connector members (4), each of the connector members (4) being located at an end of each elongate support member (2),
a plurality of upright posts (70,72), each adapted to be associated with the connector member (4) located at the end of the elongate support member and
a plurality of panels (110,112), each panel (110,112) being adapted to be secured to two of the posts (70,72), at least one of the panels (112) being adapted during use of the crate to be demounted from the framework.

2. A crate according to claim 1, in which each post (70,72) is associated with a single connecting member (4).

3. A crate according to claim 1, in which one or more of the posts (70,72) is associated with two adjacent connecting members (4).

4. A crate according to any previous claim, in which the crate (200) is stackable.

5. A crate according to claim 4, in which a plurality of the posts (70) are provided with a first engagement means extending above an adjacent panel for engagement with a second engagement means formed in the underside of a second crate to be located above the crate (200).

6. A crate according to claim 5, in which the first engagement means is a shaped protrusion (84).

7. A crate according to any previous claim, in which the elongate support members (2) are provided with means for receiving the forks of a fork-lift truck.

8. A method of constructing a crate comprises providing four elongate support members (2), two of the elongate support members (2) supporting first and second opposing longer sides of a first base plate and two of the elongate support members (2) supporting first and second opposing longer sides of a second base plate, the second base plate being disposed adjacent the first, providing connector members (4) at each end of each of the elongate support members (2), providing an upright post (70,72) in association with each connectior member (4) and securing a panel (110,112) between each pair of adjacent posts (70,72), at least one of the panels (112) being releasably secured to its associated posts (70).

9. A method according to claim 8, in which each of the first and second base plates has a pair of longer sides and a pair of shorter sides.

10. A method according to claim 9, in which the base plates are disposed with their longer sides adjacent one another.

11. A method according to claim 9, in which the first and second base plates are disposed with their shorter sides adjacent one another.

12. A method according to any of claims 8 to 11, in which each post (70,72) is associated with a single connector member (4).

13. A method according to any of claims 8 to 11, in which a post (70,72) may be associated with two adjacent connector members (4).

## Patentansprüche

1. Kiste, umfassend ein Gestell aus abmontierbaren Elementen, Folgendes umfassend:
wenigstens zwei Grundplatten (40), wobei jede davon im Wesentlichen rechteckig ist und längere und kürzere Seiten aufweist,
wenigstens vier längliche Stützelemente (2), wobei jedes davon ein erstes und ein zweites Ende aufweist, wobei zwei der länglichen Stützelemente (2) positioniert sind, um eine Stütze entlang einander gegenüberliegender längerer Seiten jeder der Grundplatten (40) bereitzustellen,
wenigstens acht Verbinderelemente (4), wobei jedes der Verbinderelemente (4) an einem Ende jedes länglichen Stützelements (2) positioniert ist,
mehrere aufrechte Pfosten (70, 72), wobei jeder davon angepasst ist, mit dem Verbinderelement (4), das sich am Ende des länglichen Stützelements befindet, verknüpft zu sein, und
mehrere Platten (110, 112), wobei jede Platte (110, 112) angepasst ist, an zwei der Pfosten (70, 72) befestigt zu sein, wobei wenigstens eine der Platten (112) angepasst ist, im Gebrauch der Kiste von dem Gestell abmontiert zu werden.

2. Kiste nach Anspruch 1, wobei jeder Pfosten (70, 72) mit einem einzigen Verbindungselement (4) verknüpft ist.

3. Kiste nach Anspruch 1, wobei einer oder mehrere der Pfosten (70, 72) mit zwei nebeneinanderliegenden Verbindungselementen (4) verknüpft sind.

4. Kiste nach einem der vorhergehenden Ansprüche, wobei die Kiste (200) stapelbar ist.

5. Kiste nach Anspruch 4, wobei mehrere der Pfosten (70) mit einem ersten Eingriffsmittel versehen sind, das sich zum Ineingrifftreten mit einem zweiten Eingriffsmittel, das auf der Unterseite einer über der Kiste (200) zu positionierenden zweiten Kiste ausgebildet ist, über eine danebenliegende Platte hinaus erstreckt.

6. Kiste nach Anspruch 5, wobei das erste Eingriffsmittel ein geformter Vorsprung (84) ist.

7. Kiste nach einem der vorhergehenden Ansprüche, wobei die länglichen Stützelemente (2) mit Mitteln zum Aufnehmen der Gabeln eines Gabelstaplers versehen sind.

8. Verfahren zum Herstellen einer Kiste, umfassend das Bereitstellen von vier länglichen Stützelementen (2), wobei zwei der länglichen Stützelemente (2) eine erste und eine zweite einander gegenüberliegende längere Seite einer ersten Grundplatte stützen und zwei der länglichen Stützelemente (2) eine erste und eine zweite einander gegenüberliegende längere Seite einer zweiten Grundplatte stützen, wobei die zweite Grundplatte neben der ersten angeordnet ist, wodurch Verbinderelemente (4) an jedem Ende jedes der länglichen Stützelemente (2) bereitgestellt werden, ein aufrechter Pfosten (70, 72) in Verbindung mit jedem Verbinderelement (4) bereitgestellt wird und eine Platte (110, 112) zwischen jedem Paar von nebeneinanderliegenden Pfosten (70, 72) gesichert wird, wobei wenigstens eine der Platten (112) lösbar an ihren verknüpften Pfosten (70) befestigt ist.

9. Verfahren nach Anspruch 8, wobei jede der ersten und der zweiten Grundplatte ein Paar längerer Seiten und ein Paar kürzerer Seiten aufweist.

10. Verfahren nach Anspruch 9, wobei die Grundplatten so angeordnet sind, dass ihre längeren Seiten nebeneinander liegen.

11. Verfahren nach Anspruch 9, wobei die erste und die zweite Grundplatte so angeordnet sind, dass ihre kürzeren Seiten nebeneinander liegen.

12. Verfahren nach einem der Ansprüche 8 bis 11, wobei jeder Pfosten (70, 72) mit einem einzigen Verbinderelement (4) verknüpft ist.

13. Verfahren nach einem der Ansprüche 8 bis 11, wobei ein Pfosten (70, 72) mit zwei nebeneinanderliegenden Verbinderelementen (4) verknüpft sein kann.

## Revendications

1. Caisse comprenant un châssis d'éléments démontables comprenant au moins deux plaques de base (40), chacune étant généralement rectangulaire et ayant des côtés plus longs et plus courts,
au moins quatre éléments de support allongés (2), chacun ayant des première et seconde extrémités, deux desdits éléments de support allongés (2) étant situés pour fournir un support le long de côtés plus longs opposés de chacune des plaques de base (40),
au moins huit éléments de raccord (4), chacun des éléments de raccord (4) étant situé à une extrémité de chaque élément de support allongé (2),
une pluralité de montants verticaux (70, 72), chacun adapté pour être associé avec l'élément de raccord (4) situé à l'extrémité de l'élément de support allongé et
une pluralité de panneaux (110, 112), chaque panneau (110, 112) étant adapté pour être arrimé à deux des montants (70, 72), au moins l'un des panneaux (112) étant adapté pendant l'utilisation de la caisse pour être démonté du châssis.

2. Caisse selon la revendication 1, dans laquelle chaque montant (70, 72) est associé à un seul élément de raccordement (4).

3. Caisse selon la revendication 1, dans laquelle un ou plusieurs des montants (70, 72) sont associés à deux éléments de raccordement (4) adjacents.

4. Caisse selon l'une quelconque des revendications précédentes, dans laquelle la caisse (200) est empilable.

5. Caisse selon la revendication 4, dans laquelle une pluralité des montants (70) sont pourvus d'un premier moyen d'enclenchement s'étendant au-dessus d'un panneau adjacent pour un enclenchement avec un second moyen d'enclenchement formé dans le dessous d'une seconde caisse pour être situé au-dessus de la caisse (200).

6. Caisse selon la revendication 5, dans laquelle le premier moyen d'enclenchement est une protubérance profilée (84).

7. Caisse selon l'une quelconque des revendications précédentes, dans laquelle les éléments de support allongés (2) sont pourvus de moyens permettant de recevoir les fourches d'un chariot élévateur à fourches.

8. Procédé de construction d'une caisse comprenant la fourniture de quatre éléments de support allongés (2), deux des éléments de support allongés (2) supportant des premier et second côtés plus longs opposés d'une première plaque de base et deux des éléments de support allongés (2) supportant des premier et second côtés plus longs opposés d'une seconde plaque de base, la seconde plaque de base étant disposée adjacente à la première, la fourniture d'éléments de raccord (4) à chaque extrémité de chacun des éléments de support allongés (2), la fourniture d'un montant vertical (70, 72) en association à chaque élément de raccord (4) et l'arrimage d'un panneau (110, 112) entre chaque paire de montants (70, 72) adjacents, au moins l'un des panneaux (112) étant arrimé de façon détachable à ses montants (70) associés.

9. Procédé selon la revendication 8, dans lequel chacune des première et seconde plaques de base comporte une paire de côtés plus longs et une paire de côtés plus courts.

10. Procédé selon la revendication 9, dans lequel les plaques de base sont disposées avec leurs côtés plus longs adjacents les uns aux autres.

11. Procédé selon la revendication 9, dans lequel les première et seconde plaques de base sont disposées avec leurs côtés plus courts adjacents les uns aux autres.

12. Procédé selon l'une quelconque des revendications 8 à 11, dans lequel chaque montant (70, 72) est associé à un seul élément de raccord (4).

13. Procédé selon l'une quelconque des revendications 8 à 11, dans lequel un montant (70, 72) peut être associé à deux éléments de raccord (4) adjacents.
